# EUROPEAN PATENT APPLICATION

(11) **EP 4 464 993 A1**
(43) Date of publication of application: **20.11.2024**
(21) Application number: 23382463.0
(22) Date of filing: 17.05.2023
(51) Int. Cl.: G01F 23/14, F17C 13/02, G01F 23/292

(54) **SYSTEM FOR DETERMINING A FUEL LEVEL IN CRYOGENIC TANKS**

(71) Applicant: Airbus Operations, S.L.U., 28906 Getafe (ES); Airbus Operations Limited, Bristol BS34 7PA (GB)
(72) Inventor: BLANCO PALENCIA, David, 28905 Getafe (ES); VICENTE OLIVEROS, David, 28905 Getafe (ES); WOOD, Christopher j., Filton (GB)

(57) **Abstract**

The system for determining a fuel level in cryogenic tanks comprises a plurality of sensors (2); and control means (4, 5) that receive information from the sensors (2) for determining the fuel level in the cryogenic tank (1), wherein said sensors (2) are optical sensors that are connected to each other and to the control means (4, 5) by optic fiber (3).

It permits to provide a system for determining a fuel level in cryogenic tanks, that ensures safe, reliable, and accurate readings of the remaining level of fuel, e.g., liquid hydrogen, in a tank.

## Description

The present invention relates to a system for determining a fuel level in cryogenic tanks, in particular, for determining a level of liquid hydrogen in a cryogenic tank used in aircrafts.

### Background of the invention

Current conventional technologies for fuel tank gauging in the aircraft industry rely on ultrasonic measurements or capacitance sensors placed inside the conventional fuel tank. Gauging techniques specific to liquid hydrogen storage are limited to research publications.

The very low storage temperatures of liquid hydrogen (about -253°C/20K) induce a strong requirement which renders conventional technology obsolete or of infeasible application.

The need to maintain such low temperatures mandates high insulation and a minimization of tank wall interfaces to minimize heat ingress. Apart from low temperatures, the high pressures found in a liquid hydrogen storage tank also dictate a tank design and architecture which is not well suited for the aforementioned conventional technologies. An all-welded tank needed for strength prohibits the use of capacitance or ultrasound sensors distributed across the internal volume of the tank due to impossibility of access for repairs and maintenance.

Furthermore, the relatively high flammability of hydrogen gas also limits the available gauging technologies.

Hybrid based gauging is used in the oil industry to measure liquid level inside of pressurized and non-pressurized tanks. It relies on the acquisition and processing of several sets of data about the temperature, pressure or level of the liquid in order to determine key quantities of interest, such as Gross Standard Volume or Mass, among others.

Optical sensors for temperature, pressure or density are already developed in the industry, but their application in hybrid-based gauging for liquid hydrogen tanks in a way which complies with the necessary requirements has not been explored.

Current limitations of this technology lie with the specific conditions related to liquid hydrogen storage, mainly temperature.

### Description of the invention

Therefore, an objective of the present invention is to provide a system for determining a fuel level in cryogenic tanks, that ensures safe, reliable, and accurate readings of the remaining level of fuel, e.g., liquid hydrogen, in a tank.

With the system of the invention, the aforementioned drawbacks are resolved, presenting other advantages that will be described below.

The system for determining a fuel level in cryogenic tanks according to the present invention is defined in claim 1. Additional optional features are included in the dependent claims.

In particular, the system for determining a fuel level in cryogenic tanks comprises:
- a plurality of sensors; and
- control means that receive information from the sensors for determining the fuel level in the cryogenic tank,
wherein said sensors are optical sensors that are connected to the control means by optic fiber.

Advantageously, the optical sensors detect the pressure and/or temperature inside the cryogenic tank, determining if the sensor is submerged in the fuel or not.

According to a preferred embodiment, the sensors are fiber Bragg gratings that provide a temperature gradient distribution which identifies the location of a liquid-gas fuel interface, and/or the sensors are Fabry Perot sensors that measure both pressure and temperature.

Furthermore, the control means preferably comprises an optical interrogator that receives the information from the sensors and a processor that process said information for determining the fuel level in the cryogenic tank.

Preferably, the optical sensors are connected to each other by a single optical fiber.

Optic fibers are well suited for the proposed application due to their versatility and multiplexing capabilities. A single line of fiber adequately equipped with the necessary sensors, such as Fiber Bragg Grating, Fabry Perot interferometer, etc., can provide dozens of local measurements in a minimally intrusive manner and without the need for conducting electricity.

Furthermore, multiplexing and small form factors allow for a minimal tank-wall-interface-to-measurements ratio. The large number of measurements can be processed from outside of the tank in order to provide an accurate measurement of the remaining level or mass through multiple temperature and pressure readings.

The optic fiber sensing technology also greatly reduces the number and complexity of parts and components that are needed inside the volume to be measured.

### Brief description of the drawings

For a better understanding of what has been stated, some drawings are attached in which, schematically and only as a non-limiting example, a practical case of embodiment is represented.

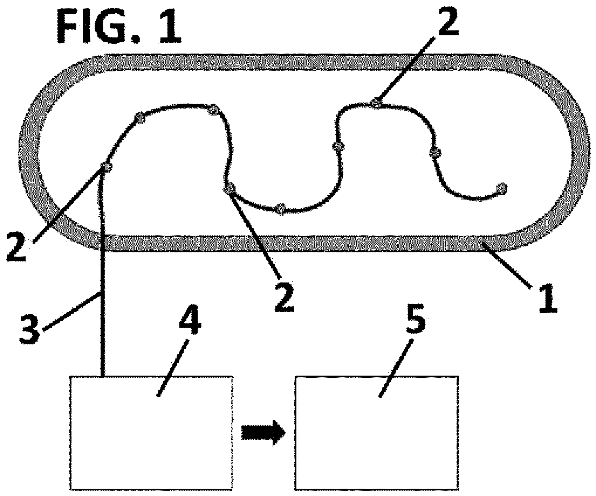

Figure 1 is a diagrammatical view of the system according to the present invention installed in a cryogenic tank.

### Description of a preferred embodiment

The system for determining a fuel level in cryogenic tanks is shown in Figure 1 installed in a cryogenic tank 1. Just as an example, the fuel is liquid hydrogen that is used in the aircraft industry.

The system comprises a plurality of optical sensors 2 that are placed inside the cryogenic tank 1 at predetermined places.

The optical sensors 2 are connected by each other by optic fiber 3, in particular, according to the shown embodiment, by a single optic fiber 3, even though a bundle of fibers can be used.

The system also comprises control means, said control means comprising an optical interrogator 4 that receives the information from the sensors 2 and a processor 5 that process said information for determining the fuel level in the cryogenic tank 1. Both the optical interrogator 4 and the processor 5 are preferably placed outside the tank 1. The optical sensors 2 are also connected to the optical interrogator 4 by optical fiber 3.

Inside the cryogenic tank 1 there is a liquid fuel, e.g., liquid hydrogen, and gas, so that the system gathers data about the state of the liquid and/or gas inside the tank 1 using the optical sensors 2.

The system according to the present invention assesses the level of liquid fuel inside the tank 1 obtaining density values through the pressure and temperature of the liquid using optical technology to obtain such parameters. Both volume and mass gauging can be performed by the system according to the present invention.

For example, volume gauging can be obtained through temperature readings by distributed fiber Bragg grating (FGB), that provide a temperature gradient distribution which identifies the location of the liquid-gas interface, hence a liquid level reference point.

It must be pointed out that a fiber Bragg grating (FBG) is a type of distributed Bragg reflector constructed in a segment of optical fiber that reflects particular wavelengths of light and transmits all others. This is achieved by creating a periodic variation in the refractive index of the fiber core, which generates a wavelength specific dielectric mirror. Hence, a fiber Bragg grating can be used as an inline optical fiber to block certain wavelengths, and it can be used for sensing applications.

Furthermore, mass gauging can be obtained through the determination of the observed fuel density with an extrinsic Fabry Perot sensor that measures both pressure and temperature inside the tank 1.

It must be pointed out that a Fabry Perot fiber optic sensor comprises a single mono-mode optical fiber with a sensing region defined by a cavity comprising two mirror surfaces that are parallel to each other and perpendicular to the axis of the optical fiber. A change in the optical path length between the mirrors leads to a shift in the frequencies of the cavity modes and can thus be used for sensing applications.

The sensors 2 send the sensed information to the optical interrogator 4 placed outside of the tank 1 and the raw data distribution is processed by the processor 5 in such a way that the level of remaining liquid fuel and its mass can be obtained.

For example, the system according to the present invention can be used for measuring the temperature fluctuation within the liquid phase, that will be significantly slower than in the gaseous phase.

Some of the sensors 2, that are placed along the interior wall of the tank 1, will be submerged, while others will be exposed to the gaseous phase of the fuel contained in the tank 1. Each sensor 2 provides readings which are recorded and processed by the control means.

From the relative temperature readings provided by the sensors 2, the processor 5 can compute which readings come from a sensor 2 which is submerged, and which come from sensors 2 exposed to gas, and, together with the data of the sensor position in the tank 1, which is known, can interpolate the exact position of the interface. This process can be done along several points or sections inside the tank 1 to account for sloshing, inclined interfaces or other events which would deviate the interface from the usual planar surface. Aggregating the computation of the liquid level at several points of the tank provides the full interface surface and thus the volume of liquid inside the tank.

It must be pointed out that circular measuring sections do not imply circular placement of the sensors 2. The location of the sensors 2 must be such that the whole length and circumference of the tank 1 is covered.

During the initial filling of the tank 1, a type of calibrated refuel will be performed. This calibrated refuel allows the location of each sensor to be confirmed, and also the wavelength at a known temperature and pressure. Additional sensors 2 within the tank will measure the absolute values for pressure and temperature.

Gas laws allow us to know the temperature range of the liquid fuel at different pressures, and the knowledge of the sensitivity for the sensors allows the determination of the wavelength shift for different temperatures.

Oversampling will allow the variations due to tolerances within the system to be averaged, thus increasing the accuracy. The transition temperature is also known for each pressure level.

## Claims

1. System for determining a fuel level in cryogenic tanks, comprising:
- a plurality of sensors (2); and
- control means (4, 5) that receive information from the sensors (2) for determining the fuel level in the cryogenic tank (1),
**characterized in that**
said sensors (2) are optical sensors that are connected to the control means (4, 5) by optic fiber (3).

2. System for determining a fuel level in cryogenic tanks according to claim 1, wherein the optical sensors (2) detect the pressure and/or temperature inside the cryogenic tank (1), determining if the sensor (2) is submerged in the fuel or not.

3. System for determining a fuel level in cryogenic tanks according to claim 2, wherein the sensors (2) are fiber Bragg gratings that provide a temperature gradient distribution which identifies the location of a liquid-gas fuel interface.

4. System for determining a fuel level in cryogenic tanks according to claim 2, wherein the sensors (2) are Fabry Perot sensors that measure both pressure and temperature.

5. System for determining a fuel level in cryogenic tanks according to anyone of the previous claims, wherein the control means comprises an optical interrogator (4) that receives the information from the sensors (2) and a processor (5) that process said information for determining the fuel level in the cryogenic tank (1).

6. System for determining a fuel level in cryogenic tanks according to anyone of the previous claims, wherein the optical sensors (2) are connected to each other by a single optical fiber (3).
